# EUROPÄISCHE PATENTSCHRIFT

(11) **EP 1 613 878 B1**
(45) Veröffentlichungstag und Bekanntmachung des Hinweises auf die Patenterteilung: **09.08.2006**
(21) Anmeldenummer: 04725281.2
(22) Anmeldetag: 02.04.2004
(51) Int. Cl.: F16G 13/16, H02G 11/00

(54) **FÜHRUNGSRINNE**
GUIDE CONDUIT
GOUTTI RE DE GUIDAGE

(30) Priorität: 04.04.2003 DE 20305618 U
(43) Veröffentlichungstag der Anmeldung: 11.01.2006
(73) Patentinhaber: igus GmbH, 51147 Köln (DE)
(72) Erfinder: BLASE, Frank, 51429 Bergisch Gladbach (DE); HERMEY, Andreas, 53773 Hennef (DE)
(74) Vertreter: Lippert, Stachow & Partner
(86) Internationale Anmeldenummer: PCT/DE2004/000720
(87) Internationale Veröffentlichungsnummer: WO 2004/090376

(56) Entgegenhaltungen:
- EP-A- 0 678 958
- DE-U- 29 613 678
- DE-U- 29 706 670

## Beschreibung

Die Erfindung betrifft eine Führungsrinne für Energieführungsketten mit langgestreckten, parallelen und mit Befestigungsmitteln auf einem Untergrund befestigbaren Seitenteilen und einer Basis, auf der das Untertrum einer Energieführungskette in Längsrichtung zwischen den Seitenteilen ablegbar ist, wobei in Längsrichtung der Seitenteile und an den Innenseiten einander gegenüberliegend jeweils mindestens eine erste Ausnehmung oder ein Vorsprung zur Aufnahme eines Vorsprunges bzw. einer Ausnehmung einer Gleitschiene zur Auflage des Obertrums der Energieführungskette vorgesehen ist.

Derartige Führungsrinnen werden zur Führung von Energieführungsketten eingesetzt, die der Aufnahme von flexiblen Versorgungsleitungen dienen. Ein spezifischer Bereich ist hierbei ihre Verwendung bei langen Verfahrwegen, wie sie beispielsweise im Anlagenbau und in der Fördertechnik auftreten. Hierbei wird eine Energieführungsketten häufig in zwei Lagen, in einem Untertrum und einem Obertrum, übereinander in der Führungsrinne abgelegt und entnommen. Hierbei ist es besonders notwendig, die Energieführungskette präzise in der Führungsrinne zu führen, da bei weniger präzisen Führung ein erhöhter Verschleiß beispielsweise in Form von Abriebpartikeln, die in der Energieführungskette und in der Führungsrinne wie Schmirgel mit weiter erhöhtem Verschleiß wirken und der Gefahr verminderter Beweglichkeit der Energieführungskette hervorrufen können. Ferner kann eine wenig präzise Führung der Energieführungskette eine Geräuschsentwicklung verursachen, die am Arbeitsplatz als unzulässig eingestuft werden kann.

Um eine präzise Führung zu erreichen, wird beispielsweise in DE 195 12 086 C1 eine Führungsrinne für Energieführungsketten der eingangs genannten Art vorgeschlagen, die Seitenteile mit formstabilem Hohlprofil aufweisen und stirnseitig abschnittsweise zusammengesetzt sind, wobei die Abschnitte zur präziseren Ausrichtung stirnseitig durch Verbindungselemente verbunden sind. Ferner wird eine in der Höhe in zwei Stufen verstellbare Gleitschiene zur Ablage des Obertrums sowie zur Geräuschsdämmung eine Verfüllung der Hohlräume im Hohlprofil mit schalldämmendem Material vorgeschlagen. Obwohl hier bereits eine erhebliche Verbesserung in der Führung zu verzeichnen ist, ist sie in Hinsicht auf Abrieb und Schallemission in vielen Fällen noch nicht befriedigend.

In EP 0 678 958 wird eine Ablegwanne für Energieführungsketten gemäß dem Oberbegriff des Anspruchs 1 offenbart.

Aufgabe der Erfindung ist daher, eine Führungsrinne bereitzustellen, die eine präzisere Führung der Energieführungskette ermöglicht.

Die Aufgabe wird dadurch gelöst, indem eine Führungsrinne der eingangs genannten Art so ausgebildet wird, dass an der Innenseite der Seitenteile ein nach innen weisender Formsprung vorgesehen ist, der einstückig mit dem Seitenteil verbunden ist und sich über einen Höhenabschnitt des Seitenteiles unterhalb der ersten Ausnehmung oder des Vorsprunges und oberhalb der Basis erstreckt, durch den das Innenmaß der Führungsrinne, d. h. der Abstand der einander gegenüberliegenden Seitenteile, im Vergleich zu dem oberhalb des Formvorsprunges liegenden Höhenabschnittes um den doppelten Betrag des Formsprunges verringert ist und somit im Vergleich mit der Führung des Obertrums eine verengte Führung des Untertrums bildet,und dass jeweils mindestens zwei in der Höhe von einander beabstandete, in Längsrichtung der Seitenteile verlaufende, an den Innenseiten einander gegenüberliegende und oberhalb des Formsprunges angeordnete zweite Ausnehmungen oder Vorsprünge zur Aufnahme von Vorsprüngen bzw. Ausnehmungen von Gleitschutzschienen zur seitlichen Führung der Energieführungskette vorgesehen sind.

Der Formsprung ist dadurch, das er unterhalb der ersten Ausnehmung oder des Vorsprungs zur Aufnahme der das Obertrum aufnehmenden Gleitschiene vorgesehen ist, seitlich des in der Führungsrinne abgelegten Untertrums angeordnet. Durch den Formsprung wird das Innenmaß der Führungsrinne, d.h. der Abstand der einander gegenüberliegenden Seitenteile, im Vergleich zu dem oberhalb des Formsprunges liegenden Höhenabschnittes um den doppelten Betrag des Formsprunges verringert und somit im Vergleich mit der Führung des Obertrums eine engere und präzisere Führung des Untertrums erzielt. Hierbei kann die Basis in verschiedenen Ausbildungen als Gleitschiene für das Untertrum oder als Träger der das Untertrum aufnehmende Gleitschiene dienen. Ferner sind in einem Seitenteil mindestens zwei zweite Ausnehmungen oder Vorsprünge zur Aufnahme von Gleitschutzschienen vorgesehen, die oberhalb des Formsprunges und damit oberhalb der durch den Formsprung verengten Führung verlaufen. Hierdurch wird die seitliche Führung der Energieführungskette weiter verbessert. Zur präzisen Führung können die Gleitschutzschienen in Einbaulage bei einer in der Führungsrinne abgelegten Energieführungskette bevorzugt entlang des oberen, der Innenseite des Seitenteils zugewandten Seitenflächenbereichs des Obertrums und des Untertrums der Energieführungskette angeordnet sein.

In einer Weiterbildung der Erfindung ist der Formsprung durch eine Verkröpfung des Seitenteiles gebildet. Hierdurch wird wenig aufwendig der Formsprung erzeugt, der durch seine Verkröpfung gerade in dem stärker belasteten unteren Teil des Seitenteiles festigkeitssteigernd wirkt, so dass die Führungsschiene hierdurch formstabiler und damit präziser in der Führung wird. Bevorzugt ist dieser Formsprung nicht scharfkantig, sondern allmählich übergehend ausgebildet.

In einer bevorzugten Weiterbildung der Erfindung ist das Seitenteil als Profilblech gefertigt ist, wobei der Formsprung durch Verdickung der Materialstärke gebildet ist. Durch die wenig aufwendige Verdickung wird wiederum die Festigkeit im unteren Bereich erhöht, so dass das Seitenteil weit weniger aufwendig als ein Hohlprofil als ein Profilblech gefertigt sein kann. Hierbei weist das Profilblech seitliche Taschen oder Ausbuchtungen zur Ausbildung der ersten und zweiten Ausnehmungen auf. Denkbar sind selbstverständlich auch eine Verkröpfung und eine Verdickung zur Erzeugung des Formsprunges. Ferner kann auch das eine Verkröpfung aufweisende Seitenteil als Profilblech gefertigt sein. Bevorzugt ist zudem das Seitenteil aus Aluminium gefertigt.

Weiterhin wird eine Ausbildung der Erfindung bevorzugt, in der die Seitenteile jeweils ein sich in Einbaulage im wesentlichen horizontal nach innen erstreckendes Fußteil aufweisen, mit dem das Seitenteil auf dem Untergrund aufliegt. Durch diese winklige Ausbildung wird die Stabilität des Seitenteils sowie seine Standfestigkeit erhöht. Hierbei kann, wie in DE 195 12 086 C1, das Fußteil als Hohlprofil ausgebildet sein, wodurch die Stabilität weiter erhöht wird.

Bevorzugt können die Gleitschutzschienen einen pilzartigen Querschnitt aufweisen mit einem Kopf, der eine ebene Oberseite zur flächigen Anlage einer Energieführungskette einschließt, und einen Fuß, der in der zugehörigen zweiten Ausnehmung befestigbar ist. Hierdurch ragt die Gleitschutzschiene in Einbaulage mit dem Kopf aus der Nut und verengt hierdurch die Breite der Führungsrinne zwischen den Gleitschutzschienen. Hierdurch wird eine weitere Präzisierung der Führung der Energieführungskette erzielt. Durch die flächige Anlagemöglichkeit der Gleitschutzschiene an die Energieführungskette wird die Führung weiter verbessert. Zur Minimierung der Reibung zwischen Energieführungskette und Führungsrinne sollte die ebene Oberseite des Kopfes sollte bevorzugt glatt sein. Weiterhin bevorzugt sollte der Kopf mit seiner der Innenseite des Seitenteiles zugewandten Seite an der Innenseite anliegen, wodurch die Gleitschutzschiene stabil anliegt.

Der Fuß der Gleitschutzschiene kann an seinem Ende eine schwalbenschwanzförmige Verbreiterung aufweisen, mit der er in einen Hinterschnitt der zugehörigen zweiten Ausnehmung einrastbar ist. Hierdurch kann die Gleitschutzschiene senkrecht Innenseite wie auch in Längsrichtung in die zweite Ausnehmung eingebracht werden, wobei der Fuß sich spreizend gegen die Innenfläche der zweiten Ausnehmung anliegt, wodurch eine stabile Positionierung der Gleitschutzschiene erzielt sowie die Möglichkeit, die Gleitschutzschiene wieder aus der zweiten Ausnehmung herauszuhebeln gegeben ist.

Bevorzugt ist zumindest der Kopf der Gleitschutzschiene aus einem abriebfesten Kunststoff gefertigt. Weiter bevorzugt sollte der Kunststoff zur Verminderung der Geräuschsentwicklung gute mechanische Dämpfungseigenschaften aufweisen.

In einer vorteilhaften Weiterbildung ist die Breite der Führungsrinne zwischen den Gleitschutzschienen größer oder gleich der Breite zwischen den Formsprüngen, wodurch beispielsweise ein Durchführen des Untertrums beim Verfahren der Energieführungskette erleichtert wird.

Zum leichteren Einführen der Energieführungskette in die Führungsrinne kann der obere Endbereich der Seitenteil trichterförmig in einem zur Innenseite des Seitenteiles spitzen Winkel nach außen geführt sein.

Bevorzugt weisen die in die erste Ausnehmung sowie die dort einsetzbare Gleitschiene einen Aufbau auf, der in DE 197 15 012 A1 beschrieben ist.

Die Befestigungsmittel können mindestens einen Montagewinkel zum seitlichen Abstützen und zum Niederhalten der Seitenteile auf dem Untergrund aufweisen, wobei der Montagewinkel mit mindestens einem hakenförmigen, in Einbaulage nach unten gebogenen Vorsprung in eine an der Außenseite des Seitenteiles angeformte Montagenut eingreift und an dem Untergrund befestigbar ist. Bevorzugt sind diese hakenförmigen Vorsprünge so angeordnet, dass sie in Montagenuten eingreifen, die sich im oberen Bereich der Seitenteile befinden. Besonders bevorzugt sind mindestens zwei Vorsprünge. Der Montagewinkel dient hierbei insbesondere bei Seitenteilen aus Profilblech zur Versteifung und damit zur Stabilisierung der Führungsrinne und zur stabileren Führung der Energieführungskette in der Führungsrinne.. Der Montagewinkel kann zur Verbindung zweier auf Stoß geführter Seitenteile in dem Übergangsbereich dieser beiden Seitenteile angeordnet sein, um eine exaktere Ausrichtung der beiden Seitenteile zueinander zu ermöglichen.

Zur weiteren Stabilisierung und Fixierung der Seitenteile auf den Untergrund können die Seitenteile an ihrem unteren Ende einen nach innen weisenden Vorsprung mit einer an der Oberseite eingeformten Montagenut aufweisen und die Befestigungsmittel mindestens ein Klemmteil zum Niederhalten und Befestigen der Seitenteile auf dem Untergrund einschließen, wobei das Klemmteil mit einer Nase über den Vorsprung der Seitenteile in die Montagenut eingreift.

Ferner können die Seitenteile an ihrem unteren Ende einen nach außen weisenden Vorsprung mit einer an der Oberseite eingeformten Montagenut aufweisen und die Befestigungsmittel mindestens ein Klemmteil zum Niederhalten und Befestigen der Seitenteile auf dem Untergrund einschließen, wobei das Klemmteil mit einer Nase über den Vorsprung der Seitenteile in die Montagenut eingreift.

Ferner können die Seitenteile an ihrer Außenseite jeweils mindestens eine in Längsrichtung verlaufende Ausnehmung oder einen Vorsprung zur Aufnahme eines die Stoßenden zweier benachbarter Seitenteile übergreifenden Befestigungsmittels in Form eines Ausrichtungselementes zur Ausrichtung der Stoßenden der Seitenteile aufweisen.

In einer bevorzugten Ausbildung ist die Ausnehmung im wesentlichen nach oben geöffnet ist und eine Hinterschneidung aufweist, in die das Ausrichtungselement mit einer Nase einrastbar ist.

Weiter bevorzugt schließt das Ausrichtungselement ein mittleres Ausrichtungsteil und an mindestens einer in Einbaulage in Längsrichtung weisende Seite ein Torsionsfederteil mit einer Rastnase ein, mit dem das Ausrichtungselement in die Ausnehmung einrastbar ist. Hierbei ist das Ausrichtungselement durch das Torsionsfederteil zugleich in der Ausnehmung verklemmbar, so dass das Ausrichtungselement nur schwer in Längsrichtung der Ausnehmung verschiebbar und somit in Längsrichtung weitgehend fixiert ist.

Weiterhin kann das Ausrichtungsteil eine über den Rand der Ausnehmung vorstehende Nase als Kraftangriff zum Eindrücken oder zur Entnahme des Ausrichtungselementes in bzw. aus der Ausnehmung aufweisen. Hierbei kann das Hindrücken des Ausrichtungselementes in die Aufnahmenut per Hand und die Entnahme mittels eines beispielsweise schraubenzieherähnlichen Werkzeuges erfolgen, das an der vorstehenden Nase von unten angreifen kann.

In einer bevorzugten Weiterbildung weist die Montagenut zur Aufnahme des Ausrichtungselementes eine zum Nutgrund hingehende konische Verengung des Querschnittes und das Ausrichtungsteil eine entsprechend keilförmige Verjüngung auf. Hierdurch ist das Ausrichtungsteil in die Montagenut keilartig einklemmbar, wobei es insbesondere durch die Rastwirkung seiner Rastnase in dieser Position gehalten werden kann, so dass hierdurch eine besonders gute Fixierung Ausrichtungselementes und damit eine besonders stabile Ausrichtung der Seitenteile möglich ist.

Bevorzugt ist weiterhin eine Ausbildung der Erfindung, in der die Ausnehmung für die Aufnahme des Ausrichtungselementes zur Ausrichtung der Seitenteile gleich der Montagenut für die Aufnahme des hakenförmigen, in Einbaulage nach unten gebogenen Vorsprungs des Montagewinkels ist.

In einer Weiterbildung der Erfindung sind die Seitenteile zur Befestigung auf dem Untergrund an quer zur Längsrichtung der Führungsschiene verlaufende Montageschienen mit einem C-Profil mittels weiterer Befestigungsmittel befestigbar.

Diese weiteren Befestigungsmittel können Verschraubungen mit im C-Profil angeordneten Widerlagern sein, wobei die Öffnung des C-Profiles zum Durchführen der Schrauben nach oben weisen soll. Hierdurch sind die Seitenteile nach Lockern der Befestigungsmittel quer zur Längsrichtung verschiebbar und damit in dieser Richtung exakt ausrichtbar.

In einer Weiterbildung ist das Seitenteil mit Klemmteilen gemäß Anspruch 10 und 11 innen- und außenseitig an der C-Schiene befestigbar, wobei besonders bevorzugt eines der Klemmteile einstückig mit einer in der C-Schiene unter dem Seitenteil bis zur Verschraubung des anderen Klemmteiles hindurchgeführten Bodenplatte verbunden ist. Hierdurch wird die Montage bei gleichzeitig guter Befestigung und Ausrichtbarkeit des Seitenteiles auf dem C-Profil vereinfacht.

Die in den Ansprüchen 8 bis 14 beanspruchten und in o.a. Beschreibung in Weiterbildungen näher erläuterten Befestigungsmittel ermöglichen eine exakte Ausrichtung und Fixierung der Seitenteile, so dass hierdurch eine verbesserte präzise Führung erzielt wird, und stellen hiermit eine eigenständige Lösung der gestellten Aufgabe dar.

Die Erfindung wird im Folgenden anhand eines Ausführungsbeispieles und einer zugehörigen Zeichnung näher erläutert. In der Zeichnung zeigen:
- Figur 1: in perspektivischer Aufsicht die in Einbaulage Außenseite eines Seitenteils einer Führungsrinne mit Befestigungsmitteln, einer Gleitschiene und Gleitschutzschienen,
- Figur 2: in perspektivischer Aufsicht die in Einbaulage Innenseite des Seitenteiles der Führungsrinne mit den Befestigungsmitteln, der Gleitschiene und den Gleitschutzschienen.
- Figur 3: eine Seitenansicht die Rückseite des Seitenteiles mit den Befestigungsmitteln, der Gleitschiene und den Gleitschutzschienen,
- Figur 4: eine stirnseitige Seitenansicht des Seitenteiles mit den Befestigungsmitteln, der Gleitschiene und den Gleitschutzschienen,
- Figur 5: eine Schnittansicht gemäß dem Schnitt A - A in Figur 3,
- Figur 6: eine Ausschnittsvergrößerung gemäß dem in Figur 4 gezeigten Ausschnitt Z mit der Gleitschutzschiene,
- Figur 7: eine Seitenansicht des Seitenteiles,
- Figur 8: eine Ausschnittsvergrößerung gemäß dem Ausschnitt Y in Figur 7,
- Figur 9: eine perspektivische Aufsicht eines Montagewinkels,
- Figur 10: eine perspektivische Aufsicht eines Klemmteiles
- Figur 11: eine perspektivische Aufsicht eines Klemmteiles mit Bodenplatte,
- Figur 12a: eine perspektivische Aufsicht eines Ausrichtungselements,
- Figur 12b: eine Seitenansicht des Ausrichtungselements,
- Figur 12c: eine weitere Seitenansicht des Ausrichtungselements,
- Figur 12d: eine Aufsicht des Ausrichtungselements,
- Figur 12e: eine Schnittansicht gemäß dem Schnitt B-B in Figur 12c,
- Figur 13: eine Seitenansicht des Seitenteils mit zwei in Einsetzrichtung stehenden Ausrichtungsteilen und
- Figur 14: eine Seitenansicht des Seitenteils mit den eingesetzten Ausrichtungsteilen.

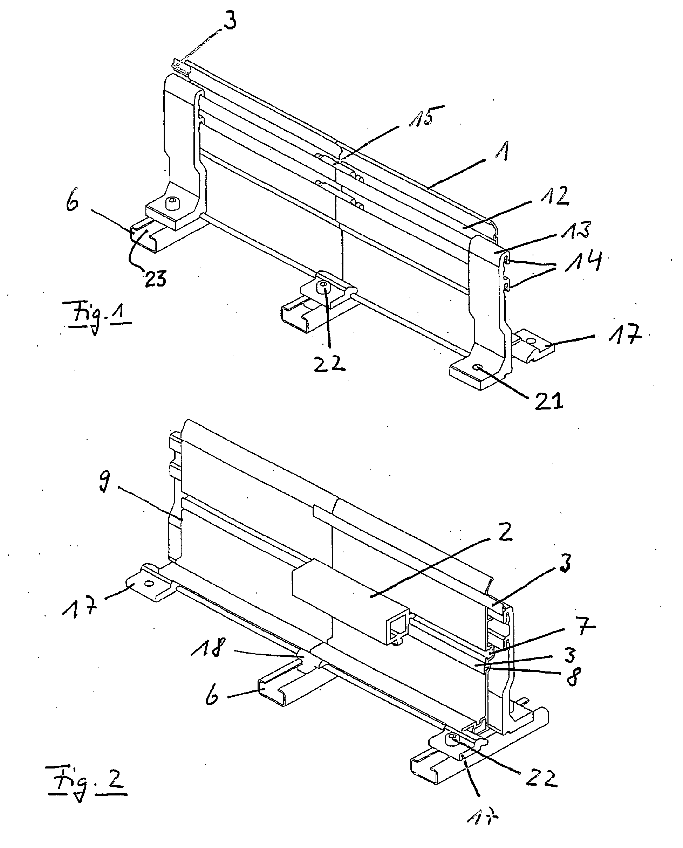

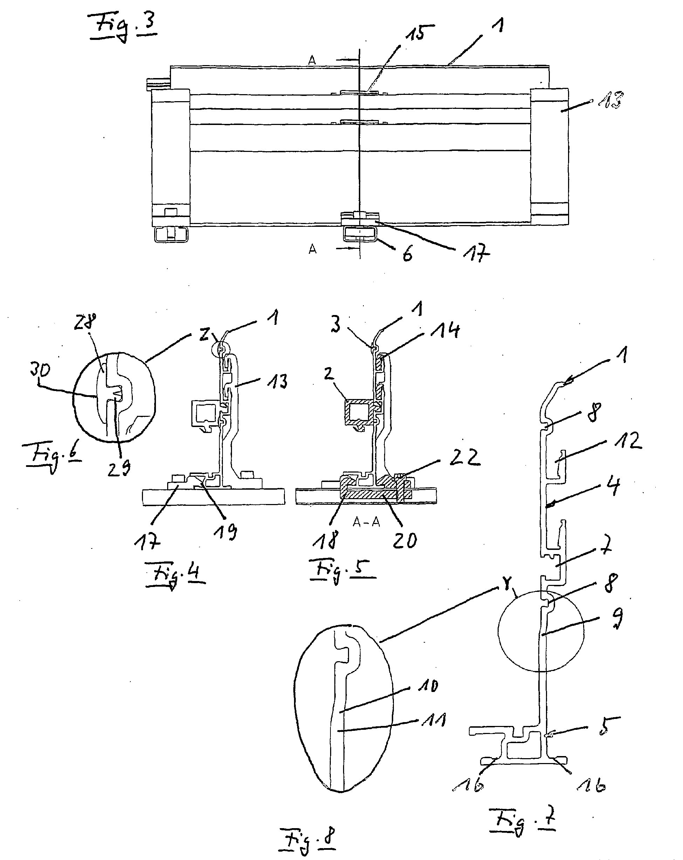

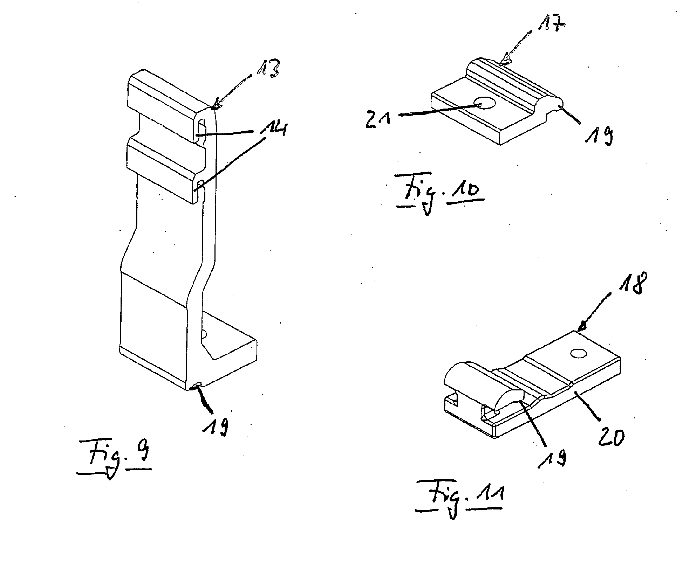

In den Figuren 1 bis 6 sind in verschiedenen Ansichten zwei Seitenteile 1 mit verschiedenen Befestigungsmitteln, einer Gleitschiene 2 und zwei Gleitschutzschienen 3 dargestellt. Die Seitenteile 1 sind auf Stoß zusammengesetzt und mit Befestigungsmitteln verbunden dargestellt. Sie bilden, wie hier nicht dargestellt, mit einem weiteren parallel beabstandeten Seitenteil eine Führungsrinne für eine Energieführungskette, die in einem Untertrum und einem Obertrum in der Führungsrinne ablegbar ist. Hierbei dient die Gleitschiene 2 zur Ablage des Obertrums und die Gleitschutzschienen 3 zur seitlichen Führung der Energieführungskette.

Die Seitenteile 1 sind als Formblech gefertigt. Die Seitenteile 1 weisen ein Oberteil 4 und ein sich in Einbaulage im wesentlichen horizontal nach innen erstreckendes Fußteil 5 auf, mit dem das Seitenteile 1 auf sich senkrecht zur Längsrichtung erstreckende C-Profile aufliegt. Ferner sind in dem Oberteil 4 eine erste Ausnehmungen 7 zur Aufnahme einer Gleitschiene 2 und zwei zweite Ausnehmungen 8 zur Aufnahme zweier Gleitschutzschienen 3 vorgesehen. An der Innenseite der Seitenteile 1 ist, wie insbesondere in den Figuren 7 und 8 mit der Seitenansicht des Seitenteils 1 ersichtlich, einen nach innen weisenden Formsprung 9 in Form eines Versatzes 10 und einer Verdickung 11 der Materialstärke angeordnet, der sich über einen Höhenabschnitt des Seitenteiles 1 unterhalb der unteren ersten Ausnehmung 7 und oberhalb des Fußteiles 5 erstreckt.

An der in Einbaulage Außenseite, die insbesondere in den Figuren 1 und 3 gezeigt ist, weist das Oberteil 4 der Seitenteile 1 zwei Montagenuten 12 auf, in die zwei parallel zueinander beabstandete Befestigungsmittel in Form von Montagewinkeln 13 jeweils mit einem in Einbaulage nach unten gebogenen Vorsprung 14 eingreifen und in dem Verbindungsbereich der beiden Seitenteile 1 zur Verbindung und Ausrichtung der Seitenteile 1 zwei weitere Befestigungsmittel in Form von Ausrichtungselementen 15 angeordnet sind. Der Montagewinkel 13 ist zusätzlich in Fig. 9 in perspektivischer Aufsicht gezeigt und die Ausrichtungselemente 15 sind in verschiedenen Ansichten in den Figuren 12a-e dargestellt. Ferner weisen die Seitenteile 1 im Fußbereich einen nach außen weisenden und einen nach innen weisenden Vorsprung mit einer an seiner Oberseite eingeformten Montagenut 16 auf. In diese Montagenuten 16 greifen von außen wie auch von innen Befestigungsmittel in Form von Klemmteilen 17/18 zum Niederhalten und Befestigen der Seitenteile 1 ein. Diese Klemmteile 17,18 sind zudem in Figur 10 bzw. 11 in perspektivischer Aufsicht gezeigt. In die außenseitige Montagenut greift zudem der Montagewinkel 13 mit einem entsprechend angepassten Vorsprung 19 zum Niederhalten und Befestigen der Seitenteile ein. Eines der beiden Klemmteile, das Klemmteil 18, ist zudem einstückig mit einer Bodenplatte 20 ausgestattet.

Die Gleitschutzschienen 3 weisen, wie insbesondere in der Ausschnittsvergrößerung Z in Fig. 6 ersichtlich, einen pilzartigen Querschnitt mit einem Kopf 28 und einen Fuß 29 auf, wobei der Kopf 28 eine eine ebene Oberseite 30 zur flächigen Anlage an die Energieführungskette einschließt und der Fuß 29 eine schwalbenschwanzförmige Verbreiterung aufweist. Hierdurch ist die Gleitschutzschiene von vorn oder seitlich in die zweite Ausnehmung 8 einbringbar und fixierbar. Durch die flächige Anlage an die Energieführungskette wird die Führung der Energieführungskette in der Führungsrinne weiter verbessert.

In den Figuren 1 bis 3 sind somit beispielhaft verschiedene Befestigungs- und Verbindungsvarianten der beiden, stirnseitig miteinander verbundenen Seitenteile 1 gezeigt. So greift der das jeweilige Seitenteil 1 abstützende, niederhaltende und befestigende Montagewinkel 13 von außen an, während von innen das Klemmteil 17 das Seitenteil 1 niederhält. Gleichzeitig können diese Befestigungselemente, wie in den Figuren durch das Überstehen dieser Befestigungselemente über den Endbereich der Seitenteile 1 angedeutet, im Verbindungsbereich zweier Seitenteile 1, beide Endbereiche der Seitenteile 1 überlappend und damit verbindend, angreifen.

Eine weitere Variante ist in dem dargestellten Verbindungsbereich beider Seitenteile 1 gezeigt, in dem zwei Klemmteile 17,18 beidseitig an die Montagenuten 16 angreifen. Ferner verbinden, wie bereits oben erwähnt, die in den oberen Montagenuten 12 eingebrachten Ausrichtungselemente die beiden Seitenteile. Anstatt der hier dargestellten unterschiedlichen Klemmteile 17, 18 können zwei Klemmteile 17 beidseitig angreifen.

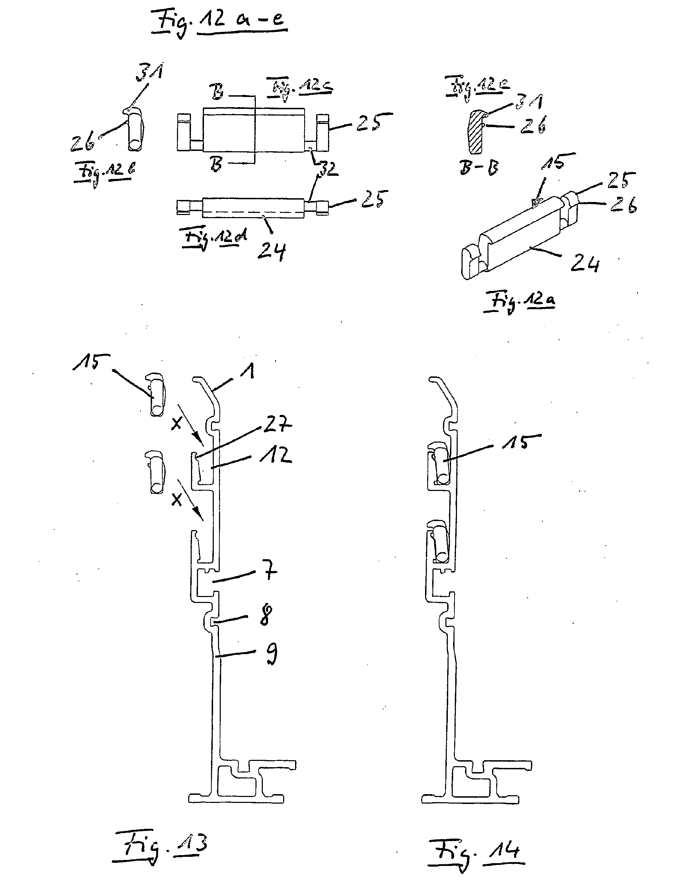

Die Befestigungsmittel 13 und 17 weisen zudem eine Bohrung 21 auf, durch die ein weiteres Befestigungsmittel in Form einer Schraube 22 zur Befestigung der Befestigungsmittel 13, 17 an einem Untergrund, wie in Fig. 1 an der rechten Seite durch das Fortlassen des C-Profiles 6 angedeutet, führbar ist. In einer anderen Befestigungsvariante werden die Befestigungsmittel 13, 17 und 18 mit dem C-Profil entweder, wie bei dem Montagewinkel 13 und dem Klemmteil 17, mit einem Widerlager oder, wie beim Klemmteil 18 über die ihm zugehörige Bodenplatte 20, die, wie in der Schnittdarstellung in Fig. 5 gezeigt, durch das C-Profil zur Verbindung mit dem Klemmteil 17 geführt wird. Die Öffnung 23 des C-Profiles6 weist nach oben, so dass die einzelnen Befestigungselemente 13,17,18 im noch unfixierten Zustand in Längsrichtung des C-Profiles 6 verschiebbar sind, so dass eine optimale Ausrichtung der stirnseitigen Seitenteile 1 sowie der in der Führungsrinne parallel beabstandeten Seitenteile erfolgen kann.

In den Figuren 13 und 14 wird schematisch angedeutet, wie die in den Figuren 12a-e gesondert dargestellte Ausrichtungselemente 15 von oben in Einsetzrichtung X in die Montagenuten 12 einsetzbar sind. Die Ausrichtungselemente 15 weisen jeweils ein mittleres Ausrichtungsteil 24 und beidseitig hierzu jeweils ein Torsionsfederteil 25 auf, das über eine Torsionsachse 32 mit dem Ausrichtungsteil 24 verbunden ist. Das Torsionsfederteil 25 weist zudem eine Rastnase 26 auf, die in eine entsprechend ausgeformte Rastnut 27 in der Montagenut 12 einrastbar ist.

Die Montagenut 12 weist zudem zur Aufnahme des Ausrichtungselementes eine zum Nutgrund hingehende konische Verengung des Querschnittes auf. Das Ausrichtungsteil 24 verfügt über eine entsprechend keilförmige Verjüngung. Hierdurch ist das Ausrichtungsteil 24 in die Montagenut 12 keilartig einklemmbar, wobei es insbesondere durch die Rastwirkung seiner in der Rastnut 27 eingerasteten Rastnase 26 in dieser Position gehalten werden kann, so dass hierdurch eine besonders gute Fixierung Ausrichtungselementes und damit eine besonders stabile Ausrichtung der Seitenteile 1 möglich ist. Das Ausrichtungsteil 24 weist zudem eine über den Rand der Ausnehmung vorstehende Nase 31 als Kraftangriff zum Eindrücken oder zur Entnahme des Ausrichtungselementes 15 aus der Montagenut 12 auf.

Die dargestellten verschiedenen Befestigungs- und Ausrichtungsvarianten zeigen, dass hierdurch die Seitenteile optimal und an den individuellen Anwendungsfall angepasst an einem Untergrund so ausgerichtet und Befestigt werden können, dass eine besonders präzise Führung der Energieführungskette in der Führungsrinne möglich ist.

### Bezugszeichenliste

- 1.: Seitenteil
- 2.: Gleitschiene
- 3.: Gleitschutzschiene
- 4.: Oberteil
- 5.: Fußteil
- 6.: C-Profil
- 7.: erste Ausnehmung
- 8.: zweite Ausnehmung
- 9.: Formsprung
- 10.: Versatz
- 11.: Verdickung
- 12.: Montagenut
- 13.: Montagewinkel
- 14.: Vorsprung
- 15.: Ausrichtungselement
- 16.: Montagenut
- 17.: Klemmteil
- 18.: Klemmteil
- 19.: Vorsprung
- 20.: Bodenplatte
- 21.: Bohrung
- 22.: Schraube
- 23.: Öffnung
- 24.: Ausrichtungsteil
- 25.: Torsionsfederteil
- 26.: Rastnase
- 27.: Rastnut
- 28.: Kopf
- 29.: Fuß
- 30.: Oberseite
- 31.: Nase
- 32.: Torsionsachse

- X: Einsetzrichtung

## Patentansprüche

1. Führungsrinne für Energieführungsketten mit langgestreckten, parallelen und mit Befestigungsmitteln (13,17,18) auf einem Untergrund befestigbaren Seitenteilen (1) und einer Basis, auf der das Untertrum einer Energieführungskette in Längsrichtung zwischen den Seitenteilen (1) ablegbar ist, wobei in Längsrichtung der Seitenteile und an den Innenseiten einander gegenüberliegend jeweils mindestens eine erste Ausnehmung (7) oder ein Vorsprung zur Aufnahme eines Vorsprunges bzw. einer Ausnehmung einer Gleitschiene (2) zur Auflage des Obertrums der Energieführungskette vorgesehen ist, da - durch **gekennzeichnet** , dass an der Innenseite der Seitenteile (1) ein nach innen weisender Formsprung (9,10,11) vorgesehen ist, der einstückig mit dem Seitenteil (1) verbunden ist und sich über einen Höhenabschnitt des Seitenteiles (1) unterhalb der ersten Ausnehmung (7) oder des Vorsprunges und oberhalb der Basis erstreckt, durch den das Innenmaß der Führungsrinne, d. h. der Abstand der einander gegenüberliegenden Seitenteile (1), im Vergleich zu dem oberhalb des Formvorsprunges (9,10,11) liegenden Höhenabschnittes um den doppelten Betrag des Formsprunges (9,10,11) verringert ist und somit im Vergleich mit der Führung des Obertrums eine verengte Führung des Untertrums bildet, und dass jeweils mindestens zwei in der Höhe von einander beabstandete, in Längsrichtung der Seitenteile verlaufende, an den Innenseiten einander gegenüberliegende und oberhalb des Formsprunges (9,10,11) angeordnete zweite Ausnehmungen (8) oder Vorsprünge zur Aufnahme von Vorsprüngen bzw. Ausnehmungen von Gleitschutzschienen (3) zur seitlichen Führung der Energieführungskette vorgesehen sind.

2. Führungsrinne nach Anspruch 1, **dadurch gekennzeichnet , dass** der Formsprung (9) durch eine Verkröpfung (10,11) des Seitenteiles gebildet ist

3. Führungsrinne nach Anspruch 1, **dadurch gekennzeichnet , dass** das Seitenteil (1) als Profilblech gefertigt ist, wobei der Formsprung (9) durch Verdickung (11) der Materialstärke gebildet ist.

4. Führungsrinne nach einem der Ansprüche 1 bis 3, da- durch **gekennzeichnet** , dass die Seitenteile (1) jeweils ein sich in Einbaulage im wesentlichen horizontal nach innen erstreckendes Fußteil (5) aufweisen, mit dem das Seitenteil (1) auf dem Untergrund aufliegt.

5. Führungsrinne nach einem der Ansprüche 1 bis 4 mit mindestens einem Paar gegenüberliegenden Gleitschutzschienen (3), **dadurch gekennzeichnet, dass** die Gleitschutzschienen (3) aufweisen einen pilzartigen Querschnitt mit einem Kopf (28), der eine ebene Oberseite (30) zur flächigen Anlage einer Energieführungskette einschließt, und einen Fuß (29), der in der zugehörigen zweiten Ausnehmung (8) befestigbar ist.

6. Führungsrinne nach Anspruch 5, **dadurch gekennzeichnet , dass** der Fuß (29) eine schwalbenschwanzförmige Verbreiterung an seinem Ende aufweist, mit der er in einen Hinterschnitt der zugehörigen zweiten Ausnehmung (8) einrastbar ist.

7. Führungsrinne nach Anspruch 5 oder 6, **dadurch gekennzeichnet, dass** die Breite der Führungsrinne zwischen den Gleitschutzschienen (3) größer oder gleich der Breite zwischen den Formsprüngen (9,10,11) ist.

8. Führungsrinne nach einem der Ansprüche 1 bis 7 mit Befestigungsmitteln, **dadurch gekennzeichnet** , das s die Befestigungsmittel (13,17,18) mindestens einen Montagewinkel (13) zum seitlichen Abstützen und zum Niederhalten der Seitenteile (1) auf dem Untergrund aufweisen, wobei der Montagewinkel (13) mit mindestens einem hakenförmigen, in Einbaulage nach unten gebogenen Vorsprung (14) in eine an der Außenseite des Seitenteiles (1) angeformte Montagenut (12) eingreift und an dem Untergrund befestigbar ist.

9. Führungsrinne nach Anspruch 8, **dadurch gekennzeichnet , dass** die Seitenteile (1) an ihrem unteren Ende einen nach innen weisenden Vorsprung mit einer an der Oberseite eingeformten Montagenut (16) aufweisen und die Befes-tigungsmittel (13,17,18) mindestens ein Klemmteil (17,18) zum Niederhalten und Befestigen der Seitenteile (1) auf dem Untergrund einschließen, wobei das Klemmteil (17,18) mit einer Nase (19) über den Vorsprung der Seitenteile (1) in die Montagenut (16) eingreift.

10. Führungsrinne nach einem der Ansprüche 1 bis 9, **dadurch gekennzeichnet, dass** die Seitenteile (1) an ihrem unteren Ende einen nach außen weisenden Vorsprung mit einer an der Oberseite eingeformten Montagenut (16) aufweisen und die Befestigungsmittel (13,17,18) mindestens ein Klemmteil (17,18) zum Niederhalten und Befestigen der Seitenteile (1) auf dem Untergrund einschließen, wobei das Klemmteil (17,18) mit einer Nase über den Vorsprung der Seitenteile in die Montagenut (16) eingreift.

11. Führungsrinne nach Anspruch 1, **dadurch gekennzeichnet , dass** die Seitenteile (1) an ihrer Außenseite jeweils mindestens eine in Längsrichtung verlaufende Ausnehmung (12) oder einen Vorsprung zur Aufnahme eines die Stoßenden zweier benachbarter Seitenteile (1) übergreifenden Befestigungsmittels in Form eines Ausrichtungselementes (15) zur Ausrichtung der Stoßenden der Seitenteile (1) aufweisen.

12. Führungsrinne nach Anspruch 11, **dadurch** gekenn- zeichnet, dass die Ausnehmung (12) im wesentlichen nach oben geöffnet ist und eine Hinterschneidung (27) aufweist, in die das Ausrichtungselement (15) mit einer Nase (26) einrastbar ist.

13. Führungsrinne nach Anspruch 12, **dadurch gekennzeichnet , dass** das Ausrichtungselement (15) ein mittleres Ausrichtungsteil (24) und an mindestens einer in Einbaulage in Längsrichtung weisende Seite ein Torsionsfederteil (25) mit einer Rastnase (26) einschließt, mit dem das Ausrichtungselement (15) in die Ausnehmung (12) einrastbar ist.

14. Führungsrinne nach Anspruch 13, **dadurch gekennzeichnet , dass** das Ausrichtungsteil (15) eine über den Rand der Ausnehmung (12) vorstehende Nase (31) als Kraftangriff zum Eindrücken oder zur Entnahme des Ausrichtungselementes (15) in bzw. aus der Ausnehmung (12) aufweist.

## Claims

1. Guide trough for energy guiding chains, with elongated, parallel side elements (1) that can be fastened on a substrate using fastening means (13, 17, 18), and a base on which the lower strand of an energy guiding chain can be deposited between the side elements (1) in the longitudinal direction, where at least first recesses (7) or projections for accommodating projections or recesses of a sliding rail (2) for depositing the upper strand of the energy guiding chain are provided in the longitudinal direction of the side elements and opposite each other on the inner sides, **characterised in that** an inward-facing step (9, 10, 11) is provided on the inner side of the side elements (1), which is integrally connected to the side element (1) and extends over a section of the height of the side element (1) below the first recess (7) or projection and above the base, by which the inside dimension of the guide trough, i.e. the distance between opposite side elements (1), is reduced compared to the section of the height located above the step (9, 10, 11) by twice the magnitude of the step (9, 10, 11) and thus forms a narrower guide for the lower strand compared to the guide for the upper strand, and **in that** at least two second recesses (8) or projections for accommodating projections or recesses of anti-sliding rails (3) for lateral guidance of the energy guiding chain are provided, these being vertically separated, running in the longitudinal direction of the side elements, lying opposite each other on the inner sides and located above the step (9, 10, 11).

2. Guide trough according to Claim 1, **characterised in that** the step (9) is formed by an offset (10, 11) in the side element.

3. Guide trough according to Claim 1, **characterised in that** the side element (1) is manufactured as a sheet-metal section, where the step (9) is formed by a thickening (11) of the material.

4. Guide trough according to one of Claims 1 to 3, **characterised in that** the side elements (1) each display a foot element (5), extending essentially horizontally inwards in installed position, by which the side element (1) rests on the substrate.

5. Guide trough according to one of Claims 1 to 4 with at least one pair of opposite anti-sliding rails (3), **characterised in that** the anti-sliding rails (3) display a mushroom-shaped cross-section, with a head (28) including a plane top side (30) for flat contact with an energy guiding chain, and with a foot (29) that can be fastened in the associated second recess (8).

6. Guide trough according to Claim 5, **characterised in that** the foot (29) displays a wider area in the form of a dovetail at the end, by means of which it can be snapped into an undercut of the associated second recess (8).

7. Guide trough according to Claim 5 or 6, **characterised in that** the width of the guide trough between the anti-sliding rails (3) is greater than or equal to the width between the steps (9, 10, 11).

8. Guide trough according to one of Claims 1 to 7 with fastening means, **characterised in that** the fastening means (13, 17, 18) include at least one mounting bracket (13) for laterally supporting the side elements (1) and holding them down on the substrate, where the mounting bracket (13) engages a mounting groove (12) integrally moulded on the outer side of the side element (1) by means of at least one, hook-shaped projection (14) that is bent downwards in installed position, and can be fastened to the substrate.

9. Guide trough according to Claim 8, **characterised in that** the lower end of the side elements (1) displays an inward-facing projection with an integrally moulded mounting groove (16) on the top side, and the fastening means (13, 17, 18) include at least one clamping element (17, 18) for holding down and fastening the side elements (1) on the substrate, where a tab (19) of the clamping element (17, 18) engages the mounting groove (16) over the projection of the side elements (1).

10. Guide trough according to one of Claims 1 to 9, **characterised in that** the lower end of the side elements (1) displays an outward-facing projection with an integrally moulded mounting groove (16) on the top side, and the fastening means (13, 17, 18) include at least one clamping element (17, 18) for holding down and fastening the side elements (1) on the substrate, where a tab of the clamping element (17, 18) engages the mounting groove (16) over the projection of the side elements.

11. Guide trough according to Claim 1, **characterised in that** the outer side of the side elements (1) displays at least one recess (12) or one projection, running in the longitudinal direction, for accommodating a fastening means, overlapping the butt ends of two adjacent side elements (1), in the form of an aligning element (15) for aligning the butt ends of the side elements (1).

12. Guide trough according to Claim 11, **characterised in that** the recess (12) is essentially open in the upward direction and displays an undercut (27) into which the aligning element (15) can be snapped by means of a tab (26).

13. Guide trough according to Claim 12, **characterised in that** the aligning element (15) includes a middle aligning section (24) and, on at least one side facing in the longitudinal direction in installed position, a torsion spring section (25) with a snap-in tab (26), by means of which the aligning element (15) can be snapped into the recess (12).

14. Guide trough according to Claim 13, **characterised in that** the aligning element (15) displays a tab (31) that projects beyond the edge of the recess (12) and serves as a point of application of force for pressing the aligning element (15) into, or removing it from, the recess (12).

## Revendications

1. Goulotte de guidage pour chaînes d'acheminement d'énergie, comprenant des pièces latérales (1) allongées, parallèles et pouvant être fixées sur un support inférieur à l'aide de moyens de fixation (13, 17, 18), et une embase sur laquelle peut être déposée le brin inférieur d'une chaîne d'acheminement d'énergie, dans la direction longitudinale entre les pièces latérales (1), goulotte dans laquelle, dans la direction longitudinale des pièces latérales et sur les côtés intérieurs de celles-ci, de manière mutuellement opposée, est prévu au moins un premier évidement (7) ou une protubérance pour recevoir une protubérance ou respectivement un évidement d'une glissière de glissement (2) destinée à former l'appui du brin supérieur de la chaîne d'acheminement d'énergie, **caractérisée en ce que** sur le côté intérieur des pièces latérales (1) est prévu un relief de forme (9, 10, 11) dirigé vers l'intérieur, lié d'un seul tenant à la pièce latérale (1), et s'étendant sur un tronçon de hauteur de la pièce latérale (1) en-dessous du premier évidement (7) ou de la protubérance et au-dessus de l'embase, relief de forme par lequel la dimension intérieure de la goulotte de guidage, c'est-à-dire la distance d'éloignement des pièces latérales (1) mutuellement opposées, est diminuée du double de la valeur du relief de forme (9, 10, 11) comparativement au tronçon de hauteur situé au-dessus du relief de forme (9, 10, 11), en formant ainsi un guidage rétréci par rapport au guidage du brin supérieur, et **en ce que** sont prévus respectivement au moins deux deuxièmes évidements (8) ou protubérances espacés mutuellement en hauteur, s'étendant dans la direction longitudinale des pièces latérales, agencés sur les côtés intérieurs de manière mutuellement opposée et au-dessus du relief de forme (9, 10, 11), ces deuxièmes évidements ou protubérances étant destinés à recevoir des protubérances ou respectivement des évidements de glissières de protection de glissement (3) pour le guidage latéral de la chaîne d'acheminement d'énergie.

2. Goulotte de guidage selon la revendication 1, **caractérisée en ce que** le relief de forme (9) est formé par un décrochement (10, 11) de la pièce latérale.

3. Goulotte de guidage selon la revendication 1, **caractérisée en ce que** la pièce latérale (1) est fabriquée en tant que tôle profilée, le relief de forme (9) étant réalisé par un renflement (11) de l'épaisseur de matériau.

4. Goulotte de guidage selon l'une des revendications 1 à 3, **caractérisée en ce que** les pièces latérales (1) présentent chacune une partie de base (5) s'étendant sensiblement horizontalement vers l'intérieur en position montée, et par laquelle la pièce latérale (1) s'appuie sur le support inférieur.

5. Goulotte de guidage selon l'une des revendications 1 à 4, comprenant au moins une paire de glissières de protection de glissement (3) mutuellement opposées, **caractérisée en ce que** les glissières de protection de glissement (3) présentent une section transversale en forme de champignon avec une tête (28) qui comprend un côté supérieur plat (30) pour un appui de surface d'une chaîne d'acheminement d'énergie, et un pied (29) qui peut être fixé dans ledit deuxième évidement (8) associé.

6. Goulotte de guidage selon la revendication 5, extrémité, un élargissement en forme de queue d'aronde, par lequel il peut s'enclencher dans une contre-dépouille dudit deuxième évidement (8) correspondant.

7. Goulotte de guidage selon la revendication 5 ou 6, **caractérisée en ce que** la largeur de la goulotte de guidage entre les glissières de protection de glissement (3) est supérieure ou égale à la largeur entre les reliefs de forme (9, 10, 11).

8. Goulotte de guidage selon l'une des revendications 1 à 7, comprenant des moyens de fixation, **caractérisée en ce que** les moyens de fixation (13, 17, 18) présentent au moins une cornière de montage (13) pour assurer l'appui latéral et le maintien en appui des pièces latérales (1) sur le support inférieur, la cornière de montage (13) s'engageant, avec au moins une protubérance (14) en forme de crochet courbé vers le bas dans la position montée, dans une rainure de montage (12) formée sur le côté extérieur de la pièce latérale (1), et la cornière de montage pouvant être fixée au support inférieur.

9. Goulotte de guidage selon la revendication 8, **caractérisée en ce que** les pièces latérales (1) comportent à leur extrémité inférieure, une protubérance dirigée vers l'intérieur et présentant, formée dans son côté supérieur, une rainure de montage (16), et les moyens de fixation (13, 17, 18) englobent au moins une pièce de serrage (17, 18) pour maintenir en appui et fixer les pièces latérales (1) sur le support inférieur, la pièce de serrage (17, 18) s'engageant avec un talon (19) dans la rainure de montage (16) en passant pardessus la protubérance des pièces latérales (1).

10. Goulotte de guidage selon l'une des revendications 1 à 9, **caractérisée en ce que** les pièces latérales (1) comportent à leur extrémité inférieure, une protubérance dirigée vers l'extérieur et présentant, formée dans son côté supérieur, une rainure de montage (16), et les moyens de fixation (13, 17, 18) englobent au moins une pièce de serrage (17, 18) pour maintenir en appui et fixer les pièces latérales (1) sur le support inférieur, la pièce de serrage (17, 18) s'engageant avec un talon (19) dans la rainure de montage (16) en passant pardessus la protubérance des pièces latérales.

11. Goulotte de guidage selon la revendication 1, **caractérisée en ce que** les pièces latérales (1) présentent sur leur côté extérieur, respectivement au moins un évidement (12) ou une protubérance s'étendant dans la direction longitudinale et destiné à recevoir un moyen de fixation destiné à chevaucher les extrémités de jointure de deux pièces latérales (1) voisines, et se présentant sous la forme d'un élément d'orientation (15) pour orienter les extrémités de jointure des pièces latérales (1).

12. Goulotte de guidage selon la revendication 11, **caractérisée en ce que** l'évidement (12) est essentiellement ouvert vers le haut et présente une contre-dépouille (27) dans laquelle peut venir s'enclencher l'élément d'orientation (15) avec un talon (26).

13. Goulotte de guidage selon la revendication 12, **caractérisée en ce que** l'élément d'orientation (15) englobe une partie centrale d'orientation (24) et, sur au moins un côté montrant dans la direction longitudinale, une partie de ressort de torsion (25) comprenant un talon d'enclenchement (26), avec lequel l'élément d'orientation (15) peut être enclenché dans l'évidement (12).

14. Goulotte de guidage selon la revendication 13, **caractérisée en ce que** la partie d'orientation (24) présente un talon (31) dépassant du bord de l'évidement (12) et faisant office de moyen d'application de force pour enfoncer ou retirer l'élément d'orientation (15) dans ou respectivement de l'évidement (12).
